# EUROPEAN PATENT SPECIFICATION

(11) **EP 4 508 499 B1**
(45) Date of publication and mention of the grant of the patent: **18.11.2026**
(21) Application number: 22722503.4
(22) Date of filing: 12.04.2022
(51) Int. Cl.: G05D 1/00, G08G 1/16

(54) **A CONTROL SYSTEM FOR CONTROLLING A FLEET OF AUTONOMOUS VEHICLES**
STEUERUNGSSYSTEM ZUR STEUERUNG EINER FLOTTE VON AUTONOMEN FAHRZEUGEN
SYSTÈME DE COMMANDE POUR COMMANDER UNE FLOTTE DE VÉHICULES AUTONOMES

(43) Date of publication of application: 19.02.2025
(73) Proprietor: Volvo Autonomous Solutions AB, 405 08 Göteborg (SE)
(72) Inventor: ROGENFELT, Åsa, 414 78 Göteborg (SE); NORESSON, Oskar, 431 31 Mölndal (SE); JOHANSSON, Gustaf, 416 54 Göteborg (SE)
(74) Representative: Kransell & Wennborg KB
(86) International application number: PCT/EP2022/059791
(87) International publication number: WO 2023/198281

(56) References cited:
- US-A1- 2020 207 371
- US-A1- 2021 009 160
- US-A1- 2021 245 780

## Description

### TECHNICAL FIELD

The invention relates to a control system for controlling a fleet of autonomous vehicles. The invention also relates to an autonomous vehicle, a method for controlling a fleet of autonomous vehicles, a computer program and a computer readable medium.

The invention can be applied for heavy-duty vehicles, such as trucks, buses and construction equipment. Although the invention will be described with respect to an autonomous truck, the invention is not restricted to this particular vehicle, but may also be used for other vehicles such as buses, wheel loaders, dump trucks, excavators etc.

### BACKGROUND

It is known to control a fleet of autonomous vehicles which are operating in an area. For example, the fleet of autonomous vehicles may operate in a construction site, a mining area, a terminal area, a harbour, or any other type of confined area. The control may for example be performed from a central control center at the area.

The control of the vehicles may comprise issuing control instructions to the vehicles. The control instructions may be instructions to perform tasks, such as loading and/or unloading of goods/material, instructions to drive autonomously from one point to another point in the area, etc.

When the vehicles drive autonomously in the area, meetings between the vehicles along road sections are likely to occur. For example, when two vehicles are about to enter a relatively narrow road section while driving in opposite directions, one of the vehicles may be required to stop at a predefined meeting location to allow the other vehicle to pass by. Additionally, or alternatively, the vehicles may be programmed and/or instructed to always slow down at predefined meeting locations to allow the vehicles to safely pass by each other. For example, the predefined meeting locations may comprise parallel driving paths where the meeting vehicles drive slowly in a respective driving path until leaving the predefined meeting location. When the vehicles are not at the predefined meeting locations, a higher speed may be allowed.

In view of the above, there is a strive to improve control of a fleet of autonomous vehicles so that meetings between vehicles can be carried out in a more efficient and flexible manner.

The document US 2021/009160 A1 relates to a vehicle assistance system for haul roads, comprising a computer, wherein the computer is configured for receiving an identification reference of a first vehicle and a second vehicle, receiving a current position of the first vehicle and second vehicle, providing a route of the first vehicle and second based on the identification reference and the current position, and detecting an expected location where the route of the first vehicle and the route of the second vehicle intersect or overlap. The vehicle assistance system comprises an automated vehicle control configured for adapting a driving behaviour of the first or second vehicle, wherein the driving behaviour relates to a speed limit, a cruise control speed, or a planned route of the respective vehicle.

The document US 2021/245780 A1 relates to a system for vehicle navigation. Processing circuitry of the system is programmed to receive one or more images captured by one or more cameras representative of an environment of a vehicle, identify at least one direction of at least one directional arrow on a road surface in the one or more images, determine a direction of travel for the vehicle, determine at least one navigational action for the vehicle, and cause one or more actuator systems of the vehicle to implement the determined at least one navigational action for the vehicle.

### SUMMARY

An object of the invention is to provide an improved control system for controlling a fleet of autonomous vehicles, or at least to provide a suitable alternative. More specifically, an object of the invention is to provide a more efficient and flexible control system for controlling a fleet of autonomous vehicles. Other objects of the invention are to provide an improved autonomous vehicle, an improved method for controlling a fleet of autonomous vehicles, a computer program and a computer readable medium.

The object is at least partly achieved by a control system according to claim 1.

Hence, there is provided a control system for controlling a fleet of autonomous vehicles which are adapted to travel along driving paths in an area, wherein the fleet of vehicles comprises at least two vehicles, each vehicle being adapted to utilize a first and a second driving behaviour when driving along a driving path. The first and second driving behaviours are preferably predefined driving behaviours.

The first driving behaviour is associated with driving closer to an edge of a road section, in relation to the second driving behaviour, which is associated with driving further away from the edge and closer to a center line of the road section.

The control system is configured to:
- by use of data indicative of driving status and position of the at least two vehicles, predict if a meeting between the at least two vehicles along the road section will occur, and
- when it is predicted that the meeting will occur, command at least one, preferably each one, of the at least two vehicles to utilize the first driving behaviour to thereby allow and/or facilitate for the vehicles to pass each other along the road section.

The driving status data may typically comprise information indicative of vehicle speed. The data indicative of position may typically comprise map data of the area.

By utilizing the first driving behaviour to thereby allow and/or facilitate for the vehicles to pass each other along the road section is herein meant that one of the vehicles will drive closer to one of the edges while the other vehicle will drive closer to a center line of the road section or closer to the other opposite edge of the road section.

By the provision of a control system as disclosed herein, a more flexible and/or efficient control of a fleet of autonomous vehicles is achieved. In particular, the vehicles may be allowed to utilize the second driving behaviour more often. Furthermore, the first driving behaviour may only be used when necessary, i.e. when a meeting occurs. Still further, by the present invention, vehicles may be allowed to pass by each other at any location along a road section, implying increased flexibility. The second driving behaviour, i.e. when driving closer to the center of a road section, is typically a driving behaviour which is associated with a higher productivity compared to the first driving behaviour. For example, when utilizing the second driving behaviour, navigational tolerances may be allowed to be larger compared to when utilizing the first driving behaviour. Larger navigational tolerances may imply higher allowed vehicle speed and/or reduced need of processing power for vehicle navigation. Still further, more frequent use of the second driving behaviour implies that the road wear at the edges of the road section will be reduced. Reduced road wear at the road edges implies that the road section will last for a longer time, reducing the need for road repair work. More specifically, road edges are typically more likely to be damaged when used frequently. This is especially common for non-asphalt roads, such as dirt roads, gravel roads etc. Accordingly, in one example embodiment, the area is an area comprising road sections in the form of gravel roads, dirt roads, etc., i.e. non-asphalt roads.

Optionally, commanding at least one, preferably each one, of the at least two vehicles to utilize the first driving behaviour comprises commanding at least one, preferably each one, of the at least two vehicles to switch from utilizing the second driving behaviour to instead utilize the first driving behaviour. Accordingly, the vehicle(s) may have utilized the more productive second driving behaviour before the meeting.

Optionally, switching from utilizing the second driving behaviour to instead utilize the first driving behaviour is configured to be performed at any position along the road section. Thereby, a more flexible control is achieved, implying that the first driving behaviour can be used for a shorter time. This in turn implies increased productivity.

Optionally, the control system is further configured to:
- estimate a first required transition path along the road section for switching between the second driving behaviour to the first driving behaviour, wherein the first required transition path is estimated by use of a vehicle model which is based on physical properties of the at least one vehicle. Thereby, the required transition path can be optimized for the specific vehicle, implying a shorter transition path and/or a safer transition between the second and first driving behaviours when switching therebetween. By a shorter transition path, the second driving behaviour can be used more often, implying increased productivity. By way of example, the physical properties of the vehicle may be at least one of vehicle weight, vehicle length and/or width, wheelbase length and number of articulation joints.

Optionally, switching from utilizing the second driving behaviour to instead utilize the first driving behaviour is configured to be performed at a predetermined position along the road section. Still optionally, switching from utilizing the second driving behaviour to instead utilize the first driving behaviour is configured to be performed at any one of a plurality of predetermined positions along the road section. These approaches imply a facilitated control system which may require less processing power.

Optionally, the control system is further configured to:
- by use of the data indicative of driving status and position, determine when the meeting has occurred, and therefrom:
- command the at least one, preferably each one, of the at least two vehicles to switch from utilizing the first driving behaviour to instead utilize the second driving behaviour.

Thereby, the vehicles can immediately after the meeting return to the second driving behaviour. This implies increased productivity.

Optionally, switching from utilizing the first driving behaviour to instead utilize the second driving behaviour is configured to be performed at any position along the road section.

Optionally, the control system is further configured to:
- estimate a second required transition path along the road section for switching between the first driving behaviour to the second driving behaviour, wherein the second required transition path is estimated by use of a vehicle model which is based on the physical properties of the at least one vehicle. As mentioned in the above, by optimizing the transition path, a shorter transition path and/or a safer transition between the first and second driving behaviours is achieved.

Optionally, switching from utilizing the first driving behaviour to instead utilize the second driving behaviour is configured to be performed at a predetermined position along the road section. Still optionally, switching from utilizing the first driving behaviour to instead utilize the second driving behaviour is configured to be performed at any one of a plurality of predetermined positions along the road section. These approaches imply a facilitated control system which may require less processing power.

Preferably, the second driving behavior for at least one, preferably each one, of the at least two vehicles is a default driving behaviour. By using the second driving behaviour as the default driving behaviour, i.e. the preferred behaviour which is used if nothing else is instructed by the control system, the productivity of the vehicles operating in the area can be increased. This also implies reduced wear of road edges, safer travelling by travelling in the center of the road section, reduced need of processing power for the navigation etc.

Optionally, at least one of the first and second driving behaviours is associated with predetermined driving paths in the area. Accordingly, the autonomous vehicles may navigate in the area by following the predetermined driving paths. By using predetermined driving paths, such as driving paths which have been pre-recorded by at least one autonomous vehicle and/or driving paths which have been predetermined manually or automatically by a computer, a more predictive and efficient driving in the area can be achieved. For example, predetermined driving paths imply less need of processing power when an autonomous vehicle navigates in the area. They also imply more efficient path planning, reducing the number of path options to a minimum which is required for conducting specific missions in the area, such as loading/unloading missions for the autonomous vehicles. According to example embodiments, predetermined driving paths may be adjusted, added and/or cancelled during operation of the vehicles in the area, such as adjusted in dependence on an adjusted topology of the area over time and/or a modified layout of the area over time.

Optionally, the predetermined driving paths comprise predetermined switching paths between the first and second driving behaviours, and/or vice versa. Accordingly, the autonomous vehicles may also navigate in the area by following the predetermined switching paths when required, i.e. when it is predicted that a meeting will occur.

Optionally, at least the second driving behaviours for the at least two vehicles are associated with respective predetermined driving paths in opposite directions along the road section, and the predetermined driving paths in opposite directions along the road section are at least partly overlapping driving paths so that a meeting of the at least two vehicles is not possible. According to one embodiment, the predetermined driving paths in opposite directions along the road section refer to the same driving path. This implies for example that the road section can be made narrower, thereby reducing the occupied space in the area which is used for the vehicles.

Optionally, the control system is further configured to determine a point in time and/or a position at which the at least one vehicle should initiate utilization of the first driving behaviour to thereby allow and/or facilitate for the vehicles to pass each other along the road section, wherein the point in time and/or the position is determined by comparing an estimated time period until the meeting will occur with a predetermined time period value. Still optionally, the predetermined time period value corresponds to a time period for switching between the second and the first driving behaviours. This implies that the switching between the driving behaviours can be optimized so that the second driving behaviour is used more frequently, without compromising with safety. More particularly, this implies that the switching between the driving behaviours can be performed as late as possible, without compromising with safety.

Preferably, the second driving behaviour is further associated with a higher driving speed in relation to the first driving behaviour. Accordingly, by using the second driving behaviour more frequently, productivity can be increased.

According to a second aspect of the invention, the object is at least partly achieved by an autonomous vehicle according to claim 11.

Hence, there is provided an autonomous vehicle which is adapted to travel autonomously along driving paths in an area, and wherein the autonomous vehicle is adapted to utilize a first and a second driving behaviour when driving along a driving path.

The first driving behaviour is associated with driving closer to an edge of a road section, in relation to the second driving behaviour, which is associated with driving further away from the edge and closer to a center line of the road section, and wherein the autonomous vehicle is further adapted to receive driving commands from a control system according to any one of the embodiments of the first aspect of the invention.

The autonomous vehicle preferably comprises one or more navigation sensors for navigating, or guiding, the vehicle in the area. For example, the navigation sensors may be any one of an environment perception sensor and a satellite navigation sensor. The environment perception sensor may for example be a LIDAR (Light Detection And Ranging) sensor, a RADAR (RAdio Detection And Ranging) sensor, an ultrasonic senor, a sonar (SOund Navigation And Ranging) sensor, a camera etc. The satellite navigation sensor may be a so called GNSS (Global Navigation Satellite System) sensor, such as a GPS (Global Positioning System) sensor.

Preferably, the autonomous vehicle is adapted to transmit data indicative of its driving status and position to the control system during driving. Additionally, or alternatively, other sensors associated with the area may be adapted to recognize data indicative of driving status and position of the autonomous vehicles.

According to a third aspect of the invention, the object is at least partly achieved by a method according to claim 13.

Hence, there is provided a method for controlling a fleet of autonomous vehicles which are adapted to travel along driving paths in an area, wherein the fleet of vehicles comprises at least two vehicles, each vehicle being adapted to utilize a first and a second driving behaviour when driving along a driving path.

The first driving behaviour is associated with driving closer to an edge of a road section, in relation to the second driving behaviour, which is associated with driving further away from the edge and closer to a center line of the road section.

The method comprises:
- by use of data indicative of driving status and position of the at least two vehicles, predicting if a meeting between the at least two vehicles along the road section will occur, and
- when it is predicted that the meeting will occur, commanding at least one, preferably each one, of the at least two vehicles to utilize the first driving behaviour to thereby allow and/or facilitate for the vehicles to pass each other along the road section.

Advantages and effects of the third aspect are largely analogous to advantages and effects of the first aspect of the invention. It shall also be noted that any embodiment of the first aspect is combinable with any embodiment of the third aspect of the invention, and vice versa.

Optionally, commanding at least one, preferably each one, of the at least two vehicles to utilize the first driving behaviour comprises commanding at least one, preferably each one, of the at least two vehicles to switch from utilizing the second driving behaviour to instead utilize the first driving behaviour.

Optionally, switching from utilizing the second driving behaviour to instead utilize the first driving behaviour is performed at any position along the road section.

Optionally, the method further comprises:
- estimating a first required transition path along the road section for switching between the second driving behaviour to the first driving behaviour, wherein the first required transition path is estimated by use of a vehicle model which is based on physical properties of the at least one vehicle.

Optionally, switching from utilizing the second driving behaviour to instead utilize the first driving behaviour performed at a predetermined position along the road section.

Optionally, the method further comprises:
- by use of the data indicative of driving status and position, determining when the meeting has occurred, and therefrom:
- commanding the at least one, preferably each one, of the at least two vehicles to switch from utilizing the first driving behaviour to instead utilize the second driving behaviour.

Optionally, switching from utilizing the first driving behaviour to instead utilize the second driving behaviour is performed at any position along the road section.

Optionally, the method further comprises:
- estimating a second required transition path along the road section for switching between the first driving behaviour to the second driving behaviour, wherein the second required transition path is estimated by use of a vehicle model which is based on the physical properties of the at least one vehicle.

Optionally, switching from utilizing the first driving behaviour to instead utilize the second driving behaviour is performed at a predetermined position along the road section.

Optionally, the method further comprises determining a point in time and/or a position at which the at least one vehicle should initiate utilization of the first driving behaviour to thereby allow and/or facilitate for the vehicles to pass each other along the road section, wherein the point in time and/or the position is determined by comparing an estimated time period until the meeting will occur with a predetermined time period value. Still optionally, the predetermined time period value corresponds to a time period for switching between the second and the first driving behaviours.

According to a fourth aspect of the invention, the object is at least partly achieved by a computer program according to claim 14. Hence, there is provided a computer program comprising program code means for performing the steps of the method according to any embodiment of the third aspect of the invention when said program is run on a computer.

According to a fifth aspect of the invention, the object is at least partly achieved by a computer readable medium according to claim 15. Hence, there is provided a computer readable medium carrying a computer program comprising program code means for performing the steps of the method according to any embodiment of the third aspect of the invention when said program product is run on a computer.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a side view of an autonomous vehicle according to an example embodiment of the present invention,
Fig. 2 is a schematic view of a control system for controlling a fleet of autonomous vehicles according to an example embodiment of the present invention,
Fig. 3 is a schematic view of two autonomous vehicles which are switching driving behaviours according to an example embodiment of the present invention,
Fig. 4 is a schematic view of an autonomous vehicle which is switching driving behaviours according to an example embodiment of the present invention, and
Fig. 5 is a flowchart of a method according to an embodiment of the present invention.

### DETAILED DESCRIPTION OF EXAMPLE EMBODIMENTS OF THE INVENTION

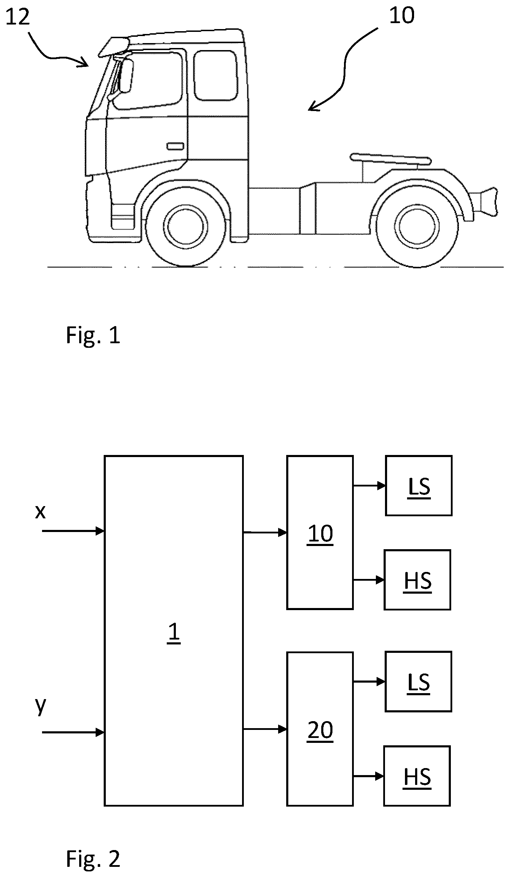

Fig. 1 depicts a side view of an autonomous vehicle 10 according to an example embodiment of the present invention. The vehicle 10 is herein a truck for towing one or more trailers (not shown). As can be seen, the vehicle 10 comprises a driver cabin 12 for a driver. Accordingly, the vehicle 10 as shown may selectively be driven autonomously or manually by a driver. For example, the driver may manually drive the vehicle 10 when it is driven in public road networks, and it may drive autonomously when it is driven in a confined area, such as a terminal area or a harbour area. Accordingly, the vehicle 10 can be adapted to at least drive autonomously as disclosed herein when the vehicle 10 is in a confined area, i.e. when not operating in a public road network. The invention is not limited to only this type of vehicle, but may advantageously be used for any other vehicle, such as buses, construction equipment and even passenger cars. However, the invention has shown to be particularly advantageous for vehicles driving autonomously in confined areas, such as mining areas, construction sites, the above-mentioned terminal area and harbour area, or any other confined area. In addition, even though a vehicle 10 with a driver cabin is shown, it shall be noted that the invention is also applicable to cabin-less autonomous vehicles, such as cabin-less dump trucks, wheel loaders, excavators, towing trucks etc.

Fig. 2 depicts a schematic view of a control system 1 for controlling a fleet of autonomous vehicles 10, 20, which are adapted to travel along driving paths HS, LS in an area.

The control system 1, indicated by a box, may be in the form of a computer, computer server, such as a central server, or the like, which is adapted to communicate with the autonomous vehicles 10, 20. Preferably, the communication between the control system 1 and the vehicles 10, 20 is performed by wireless communication, such as communication via WiFi, 3g, 4g, 5g or any other type of telecommunication. The control system 1 may comprise control logic, such as processing circuitry for processing data. It may further comprise one or more memories for storing data, including a computer program as disclosed herein, and also transmitting and receiving means for transmitting and receiving data to/from the vehicles 10, 20. The control system 1 may further comprise manual input means (not shown), such as a human machine interface (HMI) for receiving manual instructions and/or for informing an operator about status of the fleet of autonomous vehicles 10, 20. For example, an operator may manually instruct one or more of the autonomous vehicles 10, 20 of the fleet to carry out certain missions, such as loading and/or unloading missions. The operator may additionally or alternatively provide a "wake-up" instruction to activate one or more of the autonomous vehicles 10, 20, and/or a deactivation instruction to deactivate one or more of the autonomous vehicles 10, 20. The deactivation instruction may comprise an instruction for the vehicle 10, 20 to drive autonomously to a parking spot in the area.

The control system 1 may be located in the area, such as in a command central (not shown) of the area. Additionally, or alternatively, the control system 1 may be located in a remote location from the area, such as the control system is part of a cloud-based system and/or in a remote command central, such as a remote command central which is adapted to operate fleets of vehicles operating in a plurality of different areas.

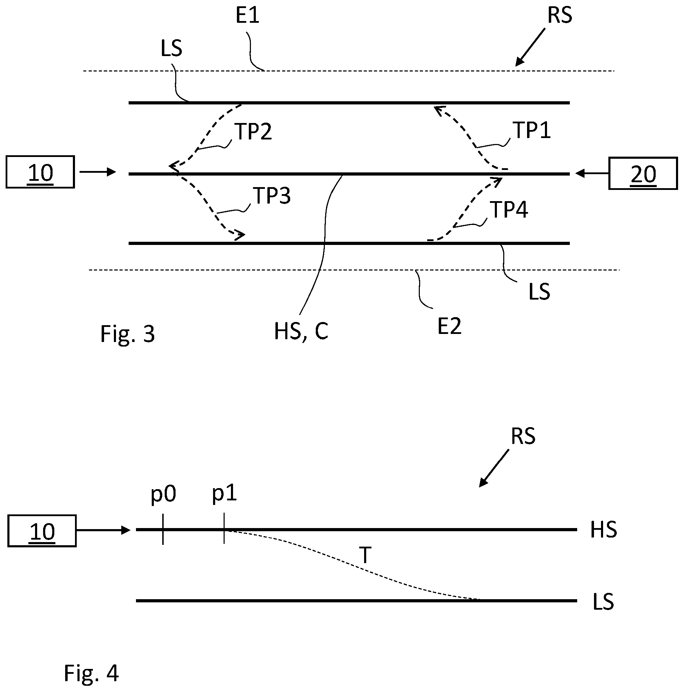

The fleet of vehicles comprises at least two vehicles 10, 20. Each vehicle 10, 20 is adapted to utilize a first and a second driving behaviour LS, HS when driving along a driving path. The first driving behaviour LS is associated with driving closer to an edge E1, E2 of a road section RS, in relation to the second driving behaviour HS, which is associated with driving further away from the edge E1, E2 and closer to a center line C of the road section RS. A schematic example of a road section RS is shown in fig 3. The edges E1 and E2 of the road section RS are edges on opposite sides of the center line C. As indicated in fig. 2 by arrows to respective boxes, each vehicle 10, 20 can utilize either the first driving behaviour LS or the second driving behaviour HS.

The control system 1 is configured to:
- by use of data indicative of driving status x and position y of the at least two vehicles 10, 20, predict if a meeting between the at least two vehicles 10, 20 along the road section RS will occur, and
- when it is predicted that the meeting will occur, command at least one, preferably each one, of the at least two vehicles 10, 20 to utilize the first driving behaviour LS to thereby allow and/or facilitate for the vehicles 10, 20 to pass each other along the road section RS.

The commanding of at least one, preferably each one, of the at least two vehicles 10, 20 is indicated in fig. 2 by the arrows between the control system 1 and the vehicles 10, 20. As mentioned in the above, this is preferably performed by wireless communication means.

The driving status data x may typically comprise information indicative of vehicle speed, and the data indicative of position y may typically comprise map data of the area. Furthermore, the first and second driving behaviours LS, HS are preferably predefined for each respective vehicle. For example, each vehicle 10, 20 may comprise a respective control unit (not shown) which is configured to drive the respective vehicle autonomously according to the first and the second predefined driving behaviours LS, HS. Accordingly, each respective control unit of the respective vehicle 10, 20 may be configured to issue control signals to one or more actuators (not shown) which are adapted to control vehicle motion, i.e. at least one of propulsion force, braking force and steering.

The driving status data x may comprise further status information, such as vehicle weight, type of load, if the vehicle is loaded or unloaded, type of mission etc. Such data may be used for selecting which one of the first and second driving behaviours LS, HS a vehicle 10, 20 should utilize.

Fig. 3 depicts a schematic view when each one of the at least two vehicles 10, 20 are commanded to utilize the first driving behaviour LS to thereby allow and/or facilitate for the vehicles 10, 20 to pass each other along the road section RS. The first driving behaviour LS is shown as respective lines next to the edges E1, E2. The lines represent driving paths for the vehicles 10, 20. The line HS, C in fig. 3 represents the driving paths for the vehicles 10, 20 when utilizing the second driving behaviour HS. As shown, the vehicles 10, 20 are initially driving in opposite directions towards each other at the center C of the road section RS. Accordingly, at this point in time, each vehicle 10, 20 is utilizing the second driving behaviour HS. When it has been predicted that the meeting will occur, each vehicle 10, 20 is commanded to utilize the first driving behaviour LS instead. This is indicated by the dashed arrows TP1, TP3 in the figure which are directed from the center C of the road section RS towards the respective edges E1, E2 of the road section RS.

When the vehicles 10, 20 are driving in opposite directions in the road section RS as show in e.g. fig. 3, the switching from the second to the first driving behaviour for each vehicle 10, 20 is configured so that both vehicles 10, 20 are either making a left turn or a right turn, as seen in the travel direction of each vehicle 10, 20. Thereby, the vehicles 10, 20 can safely pass each other and avoid a collision. On the other hand, in the event the vehicles 10, 20 are driving in the same direction in the road section RS, the switching from the second to the first driving behaviour for each vehicle is preferably configured so that one of the vehicles is making a left turn and the other vehicle is making a right turn, as seen in the travel direction of each vehicle. Thereby, the vehicles can safely pass by each other and avoid a collision.

The switching from utilizing the second driving behaviour HS to instead utilize the first driving behaviour LS may be configured to be performed at any position along the road section RS.

The control system 1 may further be configured to estimate a first required transition path TP1, TP3 along the road section RS for switching between the second driving behaviour HS to the first driving behaviour LS, wherein the first required transition path TP1, TP3 is estimated by use of a vehicle model which is based on physical properties of the at least one vehicle 10, 20. For example, based on information about vehicle weight, wheelbase, number of articulation joints etc, a vehicle model may be used to estimate the minimum required transition path TP1, TP3 for switching between the driving behaviours LS, HS, without compromising with safety. An example of a vehicle model is the so-called bicycle model. Another example of a vehicle model that can be used for this purpose is the so-called Ackermann model.

According to an example embodiment, switching from any one of the driving behaviours to the other driving behaviour may be denoted as performing a lane change or path change.

Alternatively, switching from utilizing the second driving behaviour HS to instead utilize the first driving behaviour LS may be configured to be performed at a predetermined position along the road section RS.

With reference to fig. 3, the control system 1 may further be configured to:
- by use of the data indicative of driving status and position, determine when the meeting has occurred, and therefrom:
- command the at least one, preferably each one, of the at least two vehicles 10, 20 to switch from utilizing the first driving behaviour LS to instead utilize the second driving behaviour HS.

This is indicated by the dashed arrows TP2, TP4 in the figure which are directed from each respective driving path LS associated with the respective edges E1, E2 to the center line C of the road section RS.

The switching from utilizing the first driving behaviour LS to instead utilize the second driving behaviour HS may be configured to be performed at any position along the road section RS.

As shown, the control system 1 may further be configured to estimate a second required transition path TP2, TP4 along the road section RS for switching between the first driving behaviour LS to the second driving behaviour HS, wherein the second required transition path TP2, TP4 is estimated by use of a vehicle model which is based on the physical properties of the at least one vehicle 20. The vehicle model may be the same vehicle model used for estimating the first required transition path TP1, TP3.

Alternatively, switching from utilizing the first driving behaviour LS to instead utilize the second driving behaviour HS may be configured to be performed at a predetermined position along the road section RS.

The second driving behavior HS for at least one, preferably each one, of the at least two vehicles 10, 20 is a default driving behaviour. Accordingly, the vehicles 10, 20 may most often utilize the second driving behaviour HS when the vehicles 10, 20 are driving closer to the center C of the road section RS.

At least one of the first LS and second HS driving behaviours is associated with predetermined driving paths in the area, e.g. as shown in fig. 3.

The predetermined driving paths HS, LS may comprise predetermined switching paths between the first LS and second HS driving behaviours, and/or vice versa. Accordingly, the paths TP1, TP2, TP3, TP4 as shown in fig. 3 may be predetermined switching paths.

At least the second driving behaviours HS for the at least two vehicles 10, 20 may be associated with respective predetermined driving paths in opposite directions along the road section RS, and the predetermined driving paths in opposite directions along the road section RS may be at least partly overlapping driving paths so that a meeting of the at least two vehicles 10, 20 is not possible. This situation is shown in fig. 3.

With reference to fig. 4, the control system 1 may further be configured to determine a point in time and/or a position p0 at which the at least one vehicle 10 should initiate utilization of the first driving behaviour LS to thereby allow and/or facilitate for the vehicles 10, 20 to pass each other along the road section RS, wherein the point in time and/or the position p0 is determined by comparing an estimated time period until the meeting will occur with a predetermined time period value T. In the shown embodiment, the predetermined time period value T corresponds to a time period for switching between the second HS and the first LS driving behaviours.

In the shown embodiment, p1 is a position where the actual transition from the second driving behaviour to the first driving behaviour begins. This position may be a predefined transition position. At this position p1, the vehicle 10 may be required to have a predetermined speed which allows the vehicle to safely switch between the driving behaviours.

The position p0 at which the at least one vehicle 10 should initiate utilization of the first driving behaviour LS may for example be a position where the vehicle 10 is starting to slow down its speed so that it will have the predetermined speed when reaching the position p1. In order to determine the position p0, information about any one of the current weight of the vehicle, current road friction, braking capability etc. may be used. Accordingly, by this information it may be determined how long distance is required for braking the vehicle 10 so that it attains the predetermined speed at the position p1. Additionally, or alternatively, other information that may be used for determining the position p0 is map data, such as information about road inclination, road curvature etc. The current road friction may be estimated by the vehicle 10 and/or it may be provided by the control system 1, e.g. it may be predetermined for the area and/or the road section RS.

The second driving behaviour HS is preferably associated with a higher driving speed in relation to the first driving behaviour LS.

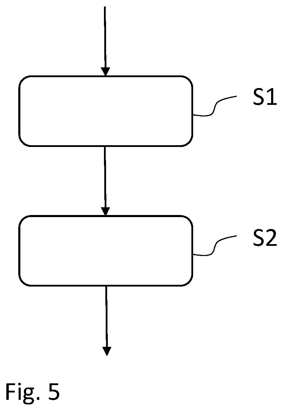

Fig. 5 depicts an embodiment of a method according to an example embodiment of the invention.

The method controls a fleet of autonomous vehicles 10, 20 which are adapted to travel along driving paths HS, LS in an area, wherein the fleet of vehicles comprises at least two vehicles 10, 20, each vehicle being adapted to utilize a first and a second driving behaviour LS, HS when driving along a driving path LS, HS.

The first driving behaviour LS is associated with driving closer to an edge E1, E2 of a road section RS, in relation to the second driving behaviour HS, which is associated with driving further away from the edge E1, E2 and closer to a center line C of the road section RS.

The method comprises:
S1: by use of data indicative of driving status and position of the at least two vehicles 10, 20, predicting if a meeting between the at least two vehicles 10, 20 along the road section RS will occur, and
S2: when it is predicted that the meeting will occur, commanding at least one, preferably each one, of the at least two vehicles 10, 20 to utilize the first driving behaviour LS to thereby allow and/or facilitate for the vehicles 10, 20 to pass each other along the road section.

The method may comprise further optional steps as disclosed herein. The method may be implemented as a computer program as disclosed herein and/or it may be provided in a computer readable medium as disclosed herein.

## Claims

1. A control system (1) for controlling a fleet of autonomous vehicles (10, 20) which are adapted to travel along driving paths (HS, LS) in an area,
wherein the fleet of vehicles (10, 20) comprises at least two vehicles (10, 20), each vehicle being adapted to utilize a first and a second driving behaviour (LS, HS) when driving along a driving path, **characterized in that**,
the first driving behaviour (LS) is associated with driving closer to an edge (E1, E2) of a road section (RS), in relation to the second driving behaviour (HS), which is associated with driving further away from the edge and closer to a center line (C) of the road section (RS),
wherein the control system (1) is configured to:
- by use of data indicative of driving status (x) and position (y) of the at least two vehicles (10, 20), predict if a meeting between the at least two vehicles (10, 20) along the road section (RS) will occur, and
- when it is predicted that the meeting will occur, command at least one, preferably each one, of the at least two vehicles (10, 20) to utilize the first driving behaviour (LS) to thereby allow and/or facilitate for the vehicles (10, 20) to pass each other along the road section (RS).

2. The control system (1) according to claim 1, wherein commanding at least one, preferably each one, of the at least two vehicles to utilize the first driving behaviour (LS) comprises commanding at least one, preferably each one, of the at least two vehicles to switch from utilizing the second driving behaviour (HS) to instead utilize the first driving behaviour (LS).

3. The control system (1) according to claim 2, wherein switching from utilizing the second driving behaviour (HS) to instead utilize the first driving behaviour (LS) is configured to be performed at any position along the road section (RS).

4. The control system (1) according to claim 3, further configured to:
- estimate a first required transition path (TP1, TP3) along the road section for switching between the second driving behaviour (HS) to the first driving behaviour (LS), wherein the first required transition path is estimated by use of a vehicle model which is based on physical properties of the at least one vehicle.

5. The control system (1) according to any one of the preceding claims, further configured to:
- by use of the data indicative of driving status and position, determine when the meeting has occurred, and therefrom:
- command the at least one, preferably each one, of the at least two vehicles to switch from utilizing the first driving behaviour (LS) to instead utilize the second driving behaviour (HS).

6. The control system (1) according to claim 5, wherein switching from utilizing the first driving behaviour (LS) to instead utilize the second driving behaviour (HS) is configured to be performed at any position along the road section.

7. The control system (1) according to claim 6, further configured to:
- estimate a second required transition path (TP2, TP4) along the road section for switching between the first driving behaviour (LS) to the second driving behaviour (HS), wherein the second required transition path is estimated by use of a vehicle model which is based on the physical properties of the at least one vehicle.

8. The control system (1) according to any one of the preceding claims, wherein at least one of the first (LS) and second (HS) driving behaviours is associated with predetermined driving paths in the area.

9. The control system (1) according to claim 8, wherein at least the second driving behaviour (HS) for the at least two vehicles (10, 20) are associated with respective predetermined driving paths in opposite directions along the road section (RS), and wherein the predetermined driving paths in opposite directions along the road section (RS) are at least partly overlapping driving paths so that a meeting of the at least two vehicles (10, 20) is not possible.

10. The control system (1) according to any one of the preceding claims, further configured to determine a point in time and/or a position (p0) at which the at least one vehicle should initiate utilization of the first driving behaviour (LS) to thereby allow and/or facilitate for the vehicles (10, 20) to pass each other along the road section (RS), wherein the point in time and/or the position is determined by comparing an estimated time period until the meeting will occur with a predetermined time period value (T).

11. An autonomous vehicle (10, 20) which is adapted to travel autonomously along driving paths in an area, and wherein the autonomous vehicle is adapted to utilize a first and a second driving behaviour (LS, HS) when driving along a driving path, **characterized in that**,
the first driving behaviour (LS) is associated with driving closer to an edge of a road section (RS), in relation to the second driving behaviour (HS), which is associated with driving further away from the edge and closer to a center line of the road section (RS), and wherein the autonomous vehicle (10, 20) is further adapted to receive driving commands from a control system (1) according to any one of the preceding claims.

12. The autonomous vehicle (10, 20) according to claim 11, further adapted to transmit data indicative of its driving status and position to the control system (1) during driving.

13. A method for controlling a fleet of autonomous vehicles (10, 20) which are adapted to travel along driving paths in an area,
wherein the fleet of vehicles (10, 20) comprises at least two vehicles (10, 20), each vehicle being adapted to utilize a first and a second driving behaviour (LS, HS) when driving along a driving path, **characterized in that**,
the first driving behaviour (LS) is associated with driving closer to an edge of a road section, in relation to the second driving behaviour (HS), which is associated with driving further away from the edge and closer to a center line of the road section (RS),
wherein the method comprises:
- by use of data indicative of driving status and position of the at least two vehicles (10, 20), predicting if a meeting between the at least two vehicles along the road section will occur, and
- when it is predicted that the meeting will occur, commanding at least one, preferably each one, of the at least two vehicles (10, 20) to utilize the first driving behaviour (LS) to thereby allow and/or facilitate for the vehicles to pass each other along the road section.

14. A computer program comprising program code means for performing the steps of claim 13 when said program is run on a computer.

15. A computer readable medium carrying a computer program comprising program code means for performing the steps of claim 13 when said program product is run on a computer.

## Patentansprüche

1. Steuerungssystem (1) zum Steuern einer Flotte autonomer Fahrzeuge (10, 20), die dazu ausgelegt ist, entlang von Fahrstrecken (HS, LS) in einem Gebiet zu fahren,
wobei die Fahrzeugflotte (10, 20) mindestens zwei Fahrzeuge (10, 20) umfasst, wobei jedes Fahrzeug dazu ausgelegt ist, beim Fahren entlang einer Fahrstrecke ein erstes und ein zweites Fahrverhalten (LS, HS) anzuwenden, **dadurch gekennzeichnet, dass**
das erste Fahrverhalten (LS) dem Fahren näher an einem Rand (E1, E2) eines Straßenabschnitts (RS) zugeordnet ist, im Vergleich zum zweiten Fahrverhalten (HS), das dem Fahren weiter vom Rand entfernt und näher an einer Mittellinie (C) des Straßenabschnitts (RS) zugeordnet ist,
wobei das Steuerungssystem (1) zu Folgendem konfiguriert ist:
- unter Verwendung von Daten, die den Fahrzustand (x) und die Position (y) der mindestens zwei Fahrzeuge (10, 20) angeben, Vorhersagen, ob eine Begegnung zwischen den mindestens zwei Fahrzeugen (10, 20) entlang des Straßenabschnitts (RS) stattfinden wird, und
- wenn vorhergesagt wird, dass eine Begegnung stattfinden wird, Befehlen mindestens eines, vorzugsweise jedes, der mindestens zwei Fahrzeuge (10, 20), das erste Fahrverhalten (LS) anzuwenden, um es dadurch den Fahrzeugen (10, 20) zu ermöglichen und/oder zu erleichtern, entlang des Straßenabschnitts (RS) aneinander vorbeizufahren.

2. Steuerungssystem (1) nach Anspruch 1, wobei das Befehlen mindestens eines, vorzugsweise jedes, der mindestens zwei Fahrzeuge, das erste Fahrverhalten (LS) anzuwenden, das Befehlen mindestens eines, vorzugsweise jedes, der mindestens zwei Fahrzeuge, vom Anwenden des zweiten Fahrverhaltens (HS) zum Anwenden des ersten Fahrverhaltens (LS) stattdessen zu wechseln, umfasst.

3. Steuerungssystem (1) nach Anspruch 2, wobei das Wechseln vom Anwenden des zweiten Fahrverhaltens (HS) zum Anwenden des ersten Fahrverhaltens (LS) stattdessen dazu konfiguriert ist, an einer beliebigen Position entlang des Straßenabschnitts (RS) durchgeführt zu werden.

4. Steuerungssystem (1) nach Anspruch 3, das ferner zu Folgendem konfiguriert ist:
- Schätzen eines ersten erforderlichen Übergangspfads (TP1, TP3) entlang des Straßenabschnitts für das Wechseln vom zweiten Fahrverhalten (HS) zum ersten Fahrverhalten (LS), wobei der erste erforderliche Übergangspfad unter Verwendung eines Fahrzeugmodells geschätzt wird, das auf den physikalischen Eigenschaften des mindestens einen Fahrzeugs basiert.

5. Steuerungssystem (1) nach einem der vorhergehenden Ansprüche, das ferner zu Folgendem konfiguriert ist:
- unter Verwendung der Daten, die den Fahrzustand und die Position angeben, Bestimmen, wann die Begegnung stattgefunden hat, und anhand dessen:
- Befehlen des mindestens einen, vorzugsweise jedes, der mindestens zwei Fahrzeuge, vom Anwenden des ersten Fahrverhaltens (LS) zum Anwenden des zweiten Fahrverhaltens (HS) stattdessen zu wechseln.

6. Steuerungssystem (1) nach Anspruch 5, wobei das Wechseln vom Anwenden des ersten Fahrverhaltens (LS) zum Anwenden des zweiten Fahrverhaltens (HS) stattdessen dazu konfiguriert ist, an einer beliebigen Position entlang des Straßenabschnitts durchgeführt zu werden.

7. Steuerungssystem (1) nach Anspruch 6, das ferner zu Folgendem konfiguriert ist:
- Schätzen eines zweiten erforderlichen Übergangspfads (TP2, TP4) entlang des Straßenabschnitts für das Wechseln vom ersten Fahrverhalten (LS) zum zweiten Fahrverhalten (HS), wobei der zweite erforderliche Übergangspfad unter Verwendung eines Fahrzeugmodells geschätzt wird, das auf den physikalischen Eigenschaften des mindestens einen Fahrzeugs basiert.

8. Steuerungssystem (1) nach einem der vorhergehenden Ansprüche, wobei mindestens eines des ersten (LS) und des zweiten (HS) Fahrverhaltens vorbestimmten Fahrstrecken in dem Gebiet zugeordnet ist.

9. Steuerungssystem (1) nach Anspruch 8, wobei mindestens das zweite Fahrverhalten (HS) für die mindestens zwei Fahrzeuge (10, 20) jeweiligen vorbestimmten Fahrstrecken in entgegengesetzten Richtungen entlang des Straßenabschnitts (RS) zugeordnet ist, und wobei die vorbestimmten Fahrstrecken in entgegengesetzten Richtungen entlang des Straßenabschnitts (RS) sich mindestens teilweise überlappende Fahrstrecken sind, so dass eine Begegnung der mindestens zwei Fahrzeuge (10, 20) nicht möglich ist.

10. Steuerungssystem (1) nach einem der vorhergehenden Ansprüche, das ferner dazu konfiguriert ist, einen Zeitpunkt und/oder eine Position (p0) zu bestimmen, zu dem bzw. an der das mindestens eine Fahrzeug das Anwenden des ersten Fahrverhaltens (LS) initiieren sollte, um es dadurch den Fahrzeugen (10, 20) zu ermöglichen und/oder zu erleichtern, entlang des Straßenabschnitts (RS) aneinander vorbeizufahren, wobei der Zeitpunkt und/oder die Position durch das Vergleichen eines geschätzten Zeitraums bis zum Stattfinden der Begegnung mit einem vorbestimmten Zeitraumwert (T) bestimmt wird.

11. Autonomes Fahrzeug (10, 20), das dazu ausgelegt ist, autonom entlang von Fahrstrecken in einem Gebiet zu fahren, und wobei das autonome Fahrzeug dazu ausgelegt ist, beim Fahren entlang einer Fahrstrecke ein erstes und ein zweites Fahrverhalten (LS, HS) anzuwenden, **dadurch gekennzeichnet, dass**
das erste Fahrverhalten (LS) dem Fahren näher an einem Rand eines Straßenabschnitts (RS) zugeordnet ist, im Vergleich zum zweiten Fahrverhalten (HS), das dem Fahren weiter vom Rand entfernt und näher an einer Mittellinie des Straßenabschnitts (RS) zugeordnet ist, und wobei das autonome Fahrzeug (10, 20) ferner dazu ausgelegt ist, Fahrbefehle von einem Steuerungssystem (1) nach einem der vorhergehenden Ansprüche zu empfangen.

12. Autonomes Fahrzeug (10, 20) nach Anspruch 11, das ferner dazu ausgelegt ist, während des Fahrens Daten, die seinen Fahrzustand und seine Position angeben, an das Steuerungssystem (1) zu übertragen.

13. Verfahren zum Steuern einer Flotte autonomer Fahrzeuge (10, 20), die dazu ausgelegt ist, entlang von Fahrstrecken in einem Gebiet zu fahren,
wobei die Fahrzeugflotte (10, 20) mindestens zwei Fahrzeuge (10, 20) umfasst, wobei jedes Fahrzeug dazu ausgelegt ist, beim Fahren entlang einer Fahrstrecke ein erstes und ein zweites Fahrverhalten (LS, HS) anzuwenden, **dadurch gekennzeichnet, dass**
das erste Fahrverhalten (LS) dem Fahren näher an einem Rand eines Straßenabschnitts zugeordnet ist, im Vergleich zum zweiten Fahrverhalten (HS), das dem Fahren weiter vom Rand entfernt und näher an einer Mittellinie des Straßenabschnitts (RS) zugeordnet ist,
wobei das Verfahren umfasst:
- unter Verwendung von Daten, die den Fahrzustand und die Position der mindestens zwei Fahrzeuge (10, 20) angeben, Vorhersagen, ob eine Begegnung zwischen den mindestens zwei Fahrzeugen entlang des Straßenabschnitts stattfinden wird, und
- wenn vorhergesagt wird, dass die Begegnung stattfinden wird, Befehlen mindestens eines, vorzugsweise jedes, der mindestens zwei Fahrzeuge (10, 20), das erste Fahrverhalten (LS) anzuwenden, um es dadurch den Fahrzeugen (10, 20) zu ermöglichen und/oder zu erleichtern, entlang des Straßenabschnitts aneinander vorbeizufahren.

14. Computerprogramm, das Programmcodemittel zum Durchführen der Schritte nach Anspruch 13 umfasst, wenn das Programm auf einem Computer ausgeführt wird.

15. Computerlesbares Medium, das ein Computerprogramm enthält, das Programmcodemittel zum Durchführen der Schritte nach Anspruch 13 umfasst, wenn das Programmprodukt auf einem Computer ausgeführt wird.

## Revendications

1. Système de commande (1) pour commander une flotte de véhicules autonomes (10, 20) qui sont aptes à se déplacer le long de voies de conduite (HS, LS) dans une zone, la flotte de véhicules (10, 20) comprenant des au moins deux véhicules (10, 20), chaque véhicule étant apte à utiliser un premier et un second comportement de conduite (LS, HS) lors de la conduite le long d'une voie de conduite, **caractérisé en ce que**
le premier comportement de conduite (LS) est associé à une conduite plus proche d'un bord (E1, E2) d'un tronçon routier (RS) par rapport au second comportement de conduite (HS) qui est associé à une conduite plus éloignée du bord et plus proche d'une ligne médiane (C) du tronçon routier (RS).
le système de commande (1) étant configuré pour :
- à l'aide de données indicatives de l'état de conduite (x) et de la position (y) des au moins deux véhicules (10, 20) au moins, prévoir si une rencontre entre les au moins deux véhicules (10, 20) se produira le long du tronçon routier (RS), et
- lorsqu'il est prévu que la rencontre aura lieu, ordonner à au moins un véhicule, de préférence chacun des deux véhicules (10, 20), d'utiliser le premier comportement de conduite (LS) pour permettre et/ou faciliter le croisement des véhicules (10, 20) le long du tronçon routier (RS).

2. Système de commande (1) selon la revendication 1, dans lequel la commande d'au moins un véhicule, de préférence chacun des au moins deux véhicules, pour utiliser le premier comportement de conduite (LS) comprend la commande d'au moins un, de préférence chacun, des au moins deux véhicules pour passer de l'utilisation du second comportement de conduite (HS) à l'utilisation du premier comportement de conduite (LS) à la place.

3. Système de commande (1) selon la revendication 2, dans lequel le passage de l'utilisation du second comportement de conduite (HS) à l'utilisation du premier comportement de conduite (LS) à la place est configuré pour être effectué à n'importe quelle position le long du tronçon routier (RS).

4. Système de commande (1) selon la revendication 3, configuré en outre pour :
- estimer une première trajectoire de transition requise (TP1, TP3) le long du tronçon routier pour commuter entre le second comportement de conduite (HS) et le premier comportement de conduite (LS), la première trajectoire de transition requise étant estimée à l'aide d'un modèle de véhicule qui est basé sur les propriétés physiques d'au moins un véhicule.

5. Système de commande (1) selon l'une quelconque des revendications précédentes, configuré en outre pour :
- en utilisant les données indicatives de l'état de conduite et de la position de conduite, déterminer quand la réunion a eu lieu et, à partir de là :
- commander à au moins un véhicule, de préférence à chacun des deux véhicules, de passer de l'utilisation du premier comportement de conduite (LS) à l'utilisation du second comportement de conduite (HS) à la place.

6. Système de commande (1) selon la revendication 5, dans lequel le passage de l'utilisation du premier comportement de conduite (LS) à l'utilisation à la place du second comportement de conduite (HS) est configurée pour être effectuée à n'importe quelle position le long du tronçon routier.

7. Système de commande (1) selon la revendication 6, configuré en outre pour :
- estimer une seconde trajectoire de transition requise (TP2, TP4) le long du tronçon routier pour le passage du premier comportement de conduite (LS) au second comportement de conduite (HS), la seconde trajectoire de transition requise étant estimée à l'aide d'un modèle de véhicule qui est basé sur les propriétés physiques de l'au moins un véhicule.

8. Système de commande (1) selon l'une quelconque des revendications précédentes, dans lequel au moins l'un des premier (LS) et second (HS) comportements de conduite est associé à des voies de conduite prédéterminées dans la zone.

9. Système de commande (1) selon la revendication 8, dans lequel au moins le second comportement de conduite (HS) pour les au moins deux véhicules (10, 20) est associé à des voies de conduite prédéterminées respectives dans des directions opposées le long du tronçon routier (RS), et dans lequel les voies de conduite prédéterminées dans des directions opposées le long du tronçon routier (RS) sont des voies de conduite se chevauchant au moins partiellement, de sorte qu'une rencontre des au moins deux véhicules (10, 20) n'est pas possible.

10. Système de commande (1) selon l'une quelconque des revendications précédentes, configuré en outre pour déterminer un point dans le temps et/ou une position (p0) à laquelle l'au moins un véhicule devrait initier l'utilisation du premier comportement de conduite (LS) pour permettre et/ou faciliter ainsi aux véhicules (10, 20) de se croiser le long du tronçon routier (RS), le point dans le temps et/ou la position étant déterminés par comparaison d'une période estimée jusqu'à ce que la rencontre se produise avec une valeur de période prédéterminée (T).

11. Véhicule autonome (10, 20) qui est apte à se déplacer de manière autonome le long de voies de conduite dans une zone, et le véhicule autonome étant apte à utiliser un premier et un second comportement de conduite (LS, HS) lorsqu'il se déplace le long d'une voie de conduite, **caractérisé en ce que**
le premier comportement de conduite (LS) est associé à une conduite plus proche d'un bord d'un tronçon routier (RS) par rapport au second comportement de conduite (HS) qui est associé à une conduite plus éloignée du bord et plus proche d'une ligne médiane du tronçon routier (RS),
et le véhicule autonome (10, 20) étant en outre apte à recevoir des ordres de conduite d'un système de commande (1) selon l'une quelconque des revendications précédentes.

12. Véhicule autonome (10, 20) selon la revendication 11, apte en outre à des transmettre des données indicatives de son état de conduite et de sa position au système de commande (1) pendant la conduite.

13. Procédé de commande d'une flotte de véhicules autonomes (10, 20) qui sont aptes à se déplacer le long de voies de conduite dans une zone,
dans lequel la flotte de véhicules (10, 20) comprend au moins deux véhicules (10, 20), chaque véhicule étant apte à utiliser un premier et un second comportement de conduite (LS, HS) lors de la conduite le long d'une voie de conduite, **caractérisé en ce que**
le premier comportement de conduite (LS) est associé à une conduite plus proche d'un bord d'un tronçon routier par rapport au second comportement de conduite (HS) qui est associé à une conduite plus éloignée du bord et plus proche d'une ligne médiane du tronçon routier (RS), le procédé comprenant :
- à l'aide de données indiquant l'état de conduite et la position des au moins deux véhicules (10, 20), la prévision si une rencontre entre les deux véhicules (10, 20) se produira le long du tronçon routier, et
- lorsqu'il est prévu que la rencontre aura lieu, l'ordre donné à au moins un, de préférence à chacun, des deux véhicules (10, 20) d'utiliser le premier comportement de conduite (LS) pour permettre et/ou faciliter le croisement des véhicules le long du tronçon routier.

14. Programme informatique comprenant un moyen de code de programme pour exécuter les étapes de la revendication 13 lorsque ledit programme est exécuté sur un ordinateur.

15. Support lisible par ordinateur comportant un programme informatique comprenant un moyen de code de programme pour exécuter les étapes de la revendication 13 lorsque ledit produit de programme est exécuté sur un ordinateur.
